# EUROPEAN PATENT SPECIFICATION

(11) **EP 2 014 890 B1**
(45) Date of publication and mention of the grant of the patent: **22.12.2010**
(21) Application number: 08156656.4
(22) Date of filing: 21.05.2008
(51) Int. Cl.: F01P 3/18, B62K 11/10, F02B 61/02

(54) **Cooling system of engine for motorcycle**
Motorkühlsystem für Motorad
Système de refroidissement de moteur pour motocyclette

(30) Priority: 12.07.2007 JP 2007183271; 12.07.2007 JP 2007183273
(43) Date of publication of application: 14.01.2009
(73) Proprietor: HONDA MOTOR CO., LTD., Tokyo 107-8556 (JP)
(72) Inventor: Hirayama, Shuji, Saitama 351-0193 (JP); Yamanishi, Teruhide, Saitama 351-0193 (JP)
(74) Representative: Rupp, Christian

(56) References cited:
- EP-A- 0 376 352
- EP-A- 1 020 351
- EP-A- 1 090 791
- US-A1- 2002 112 680

## Description

The present invention relates to a cooling system of an engine for a small-sized vehicle where an engine main unit provided with a water jacket is rockably supported by a body frame via a supporting shaft, and a radiator in which an upper tank and a lower tank are coupled via a cooling core and at least a part of which is arranged on the downside of the supporting shaft in a side view is supported by a crankcase on the side of the crankcase forming a part of the engine main unit.

Patent document JP 03-696508 A , herein after referred to as patent document 1, in which a supporting shaft for supporting an engine main unit by a body frame is located on the upside of the front of a radiator in a side view and the radiator is arranged on the side of a crankcase of the engine main unit is known.

In the invention disclosed in the patent document 1, an uppermost part of the radiator is arranged at the substantially same level as the supporting shaft, a cooling water conduit for leading cooling water from a water jacket of the engine main unit to an upper part of the radiator is arranged on the downside of the supporting shaft with one end connected to an intermediate part in a vertical direction of the water jacket, and a conduit for air bleeding from the water jacket is arranged separately from the cooling water conduit with one end connected to the uppermost part of the water jacket. Therefore, the number of parts is increased and a conduit layout around the radiator is intricate.

The invention is made in view of such a situation and provides a cooling system of an engine for a small-sized vehicle where the number of parts is reduced, air bleeding from a water jacket is enabled and a conduit layout around a radiator can be simplified.

Moreover, in the present invention a blowby gas ventilation system for a vehicle is shown as well.

A blowby gas ventilation system for a vehicle where a flow control valve is provided to a fresh air intake pipe for conducting fresh air from an air cleaner, a downstream end of the fresh air intake pipe is connected to a crank chamber via a reed valve and blowby gas exhausted from a head cover is returned to the side of the air cleaner via a blowby gas return pipe is known in patent document JP 2005-121008 A, herein after referred to as patent document 2.

In the blowby gas ventilation system disclosed in patent document 2, the flow control valve and the reed valve are arranged in small space between a cylinder block in an engine main unit and a throttle body forming a part of an intake system and arranged on the upside of the cylinder block, components concentrate in the small space, and the blowby gas ventilation system has a problem that a degree of freedom in the arrangement of the flow control valve decreases and a problem that ease of assembly decreases.

EP Patent No. 1020351 discloses a swing-type power unit integrally including an engine and a transmission, characterized by facilitating works of assembling accessories in the engine. To this end, a swing-type power unit P integrally includes an engine E and a belt-type continuously variable transmission T for transmitting a drive force of the engine E to a drive wheel Wr and is swingably supported on a body frame. The engine E is separable from the transmission T along a parting plane, and a radiator and a cooling water pump as accessories for cooling the engine are concentratedly disposed on the engine E side. As a result, the radiator and the cooling water pump can be easily assembled in the engine from which the transmission is separated in a state in which the engine is stabilized with the parting plane directed downwardly.

US Patent Publication No. 2002/112680 discloses a vehicle radiator device having a radiator with a first tank and a second tank coupled through a heat radiation core. The radiator is mounted onto an engine in a power unit supported by a vehicle body frame. The first and second tanks of the radiator are made of synthetic resin. The radiator is mounted onto the engine through a shroud made of elastic material for conducting cooling wind of the radiator in such a manner that vibrations of the engine are absorbed by the elasticity of the shroud to thereby prevent excitation to the radiator. The resulting radiator device is a simple, low-priced structure with reduced weight, which is supported by the engine in such a manner as to isolate vibrations.

To achieve the object, the invention according to Claim 1 is based upon a cooling system of an engine for a small-sized vehicle where an engine main unit provided with a water jacket is rockably supported by a body frame via a supporting shaft, a radiator in which an upper tank and a lower tank are coupled via a cooling core and at least a part of which is arranged on the downside of the supporting shaft in a side view is supported by a crankcase on the side of the crankcase forming a part of the engine main unit, and has a characteristic that the radiator is arranged on the side of the crankcase with a front end arranged in front of the supporting shaft and a leading-out pipe provided to the engine main unit for leading out cooling water from an uppermost part of the water jacket of the engine main unit and an inlet pipe provided to the upper tank of the radiator on the upside of the supporting shaft are coupled via a conduit passing the upside of the supporting shaft in a side view to be higher from the leading-out pipe to the side of the inlet pipe.

The invention according to Claim 2 is based upon the configuration of the invention according to Claim 1 and has a characteristic that an opening into which the supporting shaft can be inserted is provided to the radiator with one end of the supporting shaft opposite to the opening in a side view in a state in which the engine main unit is supported by the body frame via the supporting shaft.

The invention according to Claim 3 is based upon the configuration of the invention according to Claim 1 or 2 and has a characteristic that the inlet pipe is provided to the upper tank with the inlet pipe having an axis extending in a longitudinal direction of the body frame and located on the upside of the supporting shaft in a side view.

The invention according to Claim 4 is based upon the configuration of the invention according to any of Claims 1 to 3 and has a characteristic that a thermostat provided with a thermostat case an axis of which is inclined so that the upside is located more outside is arranged in front of the radiator, a water jacket-side connecting pipe for connecting a second conduit for leading cooling water from the water jacket is protruded inward and diagonally upward from an upper part of the thermostat case and a radiator-side connecting pipe for connecting a third conduit for leading cooling water from the radiator is protruded outward and diagonally downward from a lower part of the thermostat case.

Further, the invention according to Claim 5 is based upon the configuration of the invention according to Claim 4 and has a characteristic that the thermostat case is fixed to a pump case of a water pump attached to the outer side of the engine main unit with a rotational axis of a pump shaft in a lateral direction of the body frame so that the thermostat case is separated in a longitudinal direction from the axis of the pump shaft and is overlapped with the pump case in the longitudinal direction.

According to the invention disclosed in Claim 1, as the leading-out pipe for leading out cooling water from the uppermost part of the water jacket is provided to the engine main unit, the inlet pipe is provided to the upper tank of the radiator on the upside of the supporting shaft for supporting the engine main unit by the body frame and the leading-out pipe and the inlet pipe are coupled via the conduit passing the upside of the supporting shaft in the side view to be higher from the leading-out pipe to the side of the inlet pipe, air in the water jacket is led on the side of the radiator via the conduit, no conduit dedicated to air bleeding is required, interference between the conduit and the supporting shaft can be avoided, the number of parts is reduced, and the conduit layout around the radiator can be simplified. In addition, as the supporting shaft is arranged at the back of the front end of the radiator, the inclination of the conduit is inhibited and the length of the conduit can be reduced.

According to the invention disclosed in Claim 2, as the opening which is opposite to one end of the supporting shaft in the side view in the state in which the engine main unit is supported by the body frame and into which the supporting shaft can be inserted is provided to the radiator, the radiator is not required to be arranged in the position that does not obstruct work for inserting the supporting shaft when the engine main unit to the crankcase of which the radiator is attached is mounted on the body frame, the radiator can be arranged in an optimum position, and a degree of freedom in the layout can be enhanced.

According to the invention disclosed in Claim 3, as the inlet pipe provided to the upper tank of the radiator has the axis extending in the longitudinal direction of the body frame and is located on the upside of the supporting shaft in the side view so as to connect the conduit for leading cooling water from the water jacket to the radiator, an overhang in front of the inlet pipe from the radiator is inhibited and the whole radiator can be compacted.

According to the invention disclosed in Claim 4, as the thermostat case is arranged in front of the radiator with the axis inclined so that the upside is located outside, the water jacket-side connecting pipe is protruded inward and diagonally upward from the upper part of the thermostat case and the radiator-side connecting pipe is protruded outward and diagonally downward from the lower part of the thermostat case, the space for which the thermostat accounts in the lateral direction of the body frame is reduced, the thermostat can be compacted, and in addition, the length of the second conduit connected to the water jacket-side connecting pipe for leading cooling water from the water jacket and the length of the third conduit connected to the radiator-side connecting pipe for leading cooling water from the radiator can be possibly reduced.

Further, according to the invention disclosed in Claim 5, as the thermostat case is fixed to the pump case of the water pump attached to the outer side of the engine main unit in a position separated from the axis of the pump shaft in the longitudinal direction and is arranged so that the thermostat case is overlapped with the pump case in the longitudinal direction, the conduits related to the water pump and the thermostat can be compactly laid out in the lateral direction of the body frame.
- Fig. 1: is a left side view showing a scooter type motorcycle.
- Fig. 2: is a sectional view showing a power unit viewed along a line 2-2 in Fig. 1.
- Fig. 3: is a side view viewed along a line 3-3 in Fig. 2 a part of which is cut.
- Fig. 4: is a sectional view viewed along a line 4-4 in Fig. 3.
- Fig. 5: is a view viewed from a direction shown by an arrow 5 in Fig. 3 a part of which is cut.
- Fig. 6: is a view corresponding to Fig. 3 in a state in which a radiator cover and a radiator are omitted.
- Fig. 7: shows a shroud and the radiator viewed along a line 7-7 in Fig. 4.
- Fig. 8: is a sectional view viewed along a line 8-8 in Fig. 3.
- Fig. 9: is a view viewed along a line 9-9 in Fig. 2.
- Fig. 10: is a view corresponding to Fig. 9 in a state in which an outside air intake duct is omitted.
- Fig. 11: is a sectional view viewed along a line 11-11 in Fig. 10.
- Fig. 12: is a sectional view viewed along a line 12-12 in Fig. 10.
- Fig. 13: is an enlarged sectional view viewed along a line 13-13 in Fig. 9.
- Fig. 14: is an enlarged sectional view viewed along a line 14-14 in Fig. 9.
- Fig. 15: is a view viewed from directions shown by arrows 15 in Figs. 13 and 14.
- Fig. 16: is a view viewed from directions shown by arrows 16 in Figs. 13 and 14.
- Fig. 17: is an enlarged sectional view viewed along a line 17-17 in Fig. 9.
- Fig. 18: is a sectional view viewed along a line 18-18 in Fig. 16.

An embodiment of the invention shown in the attached drawings will be described below.

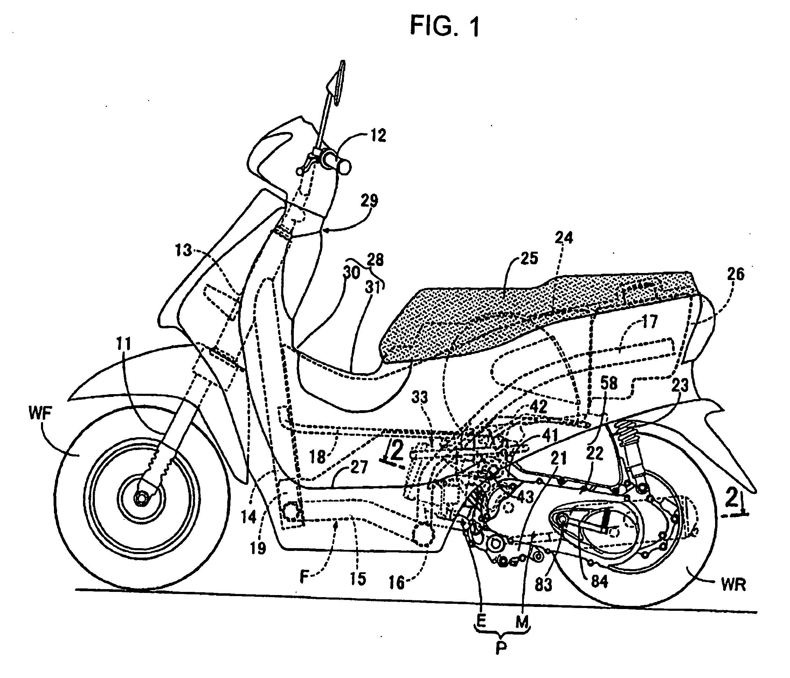

First as shown in Fig. 1, a body frame F of the scooter type motorcycle which is a small-sized vehicle is provided with: a head pipe 13 that steerably supports a front fork 11 that journals a front wheel WF at its lower end and straddles the front wheel WF and a steering handlebar 12 coupled to an upper end of the front fork 11; a cylindrical main pipe 14 extended backward and downward from the head pipe 13; a pair of right and left lower frames 15 connected to a lower part of the main pipe 14 and extended backward; a cross pipe 16 that connects rear ends of both lower frames 15; a pair of right and left rear frame pipes 17 each front end of which is linked to each of both ends of the cross pipe 16; and upper frames 18 each of which couples an intermediate part of the main pipe 14 and each intermediate part of both rear frame pipes 17 on the upsides of both lower frames 15.

The lower frames 15 are connected to both right and left sides of the lower part of the main pipe 14 by welding, are extended on both sides, further are bent on the rear sides, and are extended backward. Each rear end of the lower frames 15 is connected to each of both right and left ends of the cross pipe 16 by welding.

The power unit P including a water-cooled single-cylinder engine E arranged on the front side of a rear wheel WR and a transmission M arranged on the left side of the rear wheel WR is supported vertically rockably by each front of both rear frame pipes 17 of the body frame F and the rear wheel WR is journalled to the rear of the power unit P.

The transmission M is linked to a main unit 33, particularly a crank case 21, of the engine E on one side in a direction of the width of the body frame F, and is housed in a transmission case 22 extended to the left side of the rear wheel WR. A rear cushion unit 23 is provided between the rear of the transmission case 22 and the left rear frame pipe 17 out of the pair of right and left rear frame pipes 17.

A goods housing 24 that can house a helmet and others is arranged from the upside of the engine E to the front side of the engine E between both rear frame pipes 17 and between both upper frames 18 and the rear of the goods housing 24 is covered with a seat 25 arranged at the back of the head pipe 13 from the upside. A fuel tank 26 covered with the rear of the seat 25 from the upside is arranged between the rears of both rear frame pipes 17 at the back of the goods housing 24, and the goods housing 24 and the fuel tank 26 are supported by the body frame F.

A part of the engine E, the body frame F, the goods housing 24 and the fuel tank 26 are covered with a body cover 29, and a pair of right and left step floors 27 for putting feet of a rider seated on the seat 25 and a floor tunnel 28 rising upward between both step floors 27 are formed inside the body cover 29.

The floor tunnel 28 includes: a tunnel main part 30 which is supported by the pair of right and left upper frames 18, which ranges to each inner end of both step floors 27, which rises upward and a part of an upper part of which is open; and a cover 31 that openably closes an opening of the upper part of the tunnel main part 30. The front of the goods housing 24 is housed in the floor tunnel 28.

A hinge mechanism (not shown) for openably supporting the seat 25 is provided between the front of the seat 25 and the main pipe 14, the seat 25 can be turned forward and diagonally upward so as to enable housing and extracting goods such as a helmet in/from the goods housing 24, and the cover 31 is turned together with the seat 25 so as to open the upside of the front of the goods housing 24.

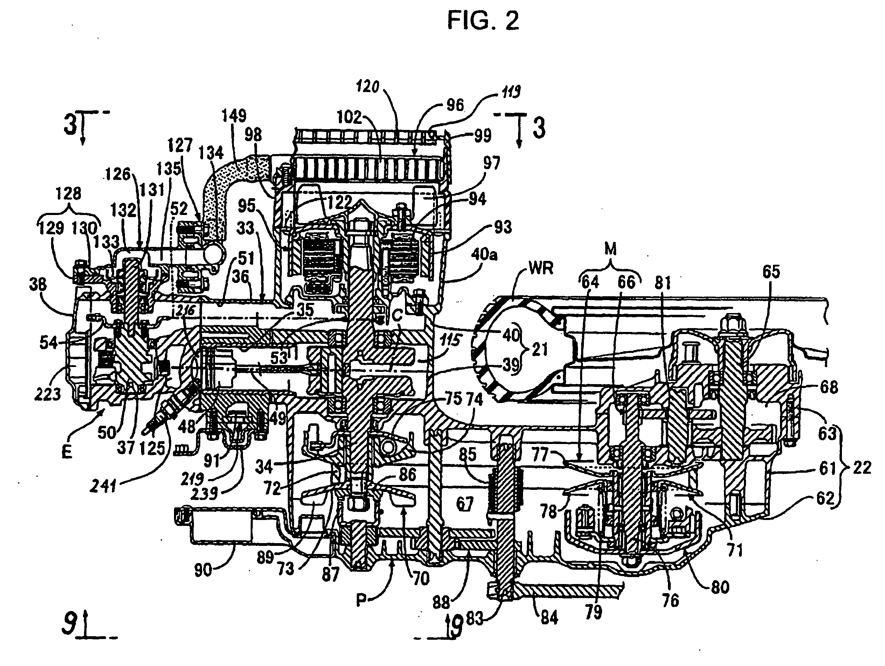

As shown in Figs. 2, 3, 9 and 10, the main unit 33 of the engine E is provided with: a crankcase 21 that rotatably supports a crankshaft 34 having an axis extending in a direction of the width of the body frame F; a cylinder block 36 having a cylinder bore 35 and connected to the crankcase 21; a cylinder head 37 connected to the cylinder block 36; and a head cover 38 connected to the cylinder head 37, and as to the crankcase 21, a left case half 39 and a right case half 40 are connected on faces perpendicular to the axis of the crankshaft 34.

The above-mentioned engine main unit 33 is mounted on the body frame F in a substantially longitudinal direction of the body frame F so that the front of a cylinder axis C of the cylinder bore 35 is slightly higher, and a pair of right and left brackets 41 provided to an upper part on the rear side of the crankcase 21 are rockably supported by stays 42 provided to each intermediate part of the rear frame pipes 17 of the body frame F via a supporting shaft or spindle 43 and each mount rubber or mount rubber 44.

A piston 48 slidably fitted inside the cylinder bore 35 is linked with the crankshaft 34 via a connecting rod 49. A camshaft 50 is rotatably supported by the cylinder head 37, and an intake valve and an exhaust valve (respectively not shown) provided to the cylinder head 37 are opened and closed by the camshaft 50. A cam chain or timing chain 52 is drivably housed in a chain passage 51 provided to the right case half 40 of the crankcase 21, the cylinder block 36 and the cylinder head 37 on the side of one end (a right end) along the axis of the crankshaft 34, and the timing chain 52 is wound onto a driving sprocket 53 provided to the crankshaft 34 and onto a driven sprocket 54 provided to the camshaft 50. Hereby, the torque of the crankshaft 34 is transmitted to the camshaft 50 at speed reducing ratio of 1/2.

An intake system 59 is connected to a side wall of an upper part of the cylinder head 37, and is provided with an intake pipe 55, a throttle body 57, and an air cleaner 58. A downstream end of the intake pipe 55 curved backward from the cylinder head 37 is connected to a side wall of an upper part of the cylinder head 37 and a fuel injection valve 56 is attached to the intake pipe 55. An upstream end of the intake pipe 55 is connected to the throttle body 57 arranged on the upside of the engine main unit 33, the throttle body 57 is connected to the air cleaner 58 (see Fig. 1) arranged on the upside of the transmission case 22, and a throttle valve 60 for controlling the quantity of intake air is openably arranged in the throttle body 57.

As shown in Fig. 2, the transmission case 22 is configured by a case main body 61 integrated with the left case half 39 of the crankcase 21 in the engine main unit 33 and extended backward, a left cover 62 connected to the case main body 61 from the left, and a right cover 63 fastened to the rear of the case main body 61 from the right.

The transmission M is configured by a belt type continuously variable transmission 64 that continuously shifts the torque of the crankshaft 34 and a speed reducing gear train 66 provided between an axle 65 of the rear wheel WR and the belt type continuously variable transmission 64. The belt type continuously variable transmission 64 is housed in a transmission chamber 67 formed between the case main body 61 and the left cover 62 in the transmission case 22 and the speed reducing gear train 66 is housed in a gear chamber 68 formed between the case main body 61 and the right cover 63 in the transmission case 22.

The belt type continuously variable transmission 64 is provided with a driving pulley 70 provided to a left end of the crankshaft 34 in the transmission chamber 67, a driven pulley 71 arranged in the rear of the transmission chamber 67 and an endless V belt 72 wound onto the driving pulley 70 and onto the driven pulley 71.

The driving pulley 70 is provided with a pulley half 73 on the fixed side fixed to the crankshaft 34 and a pulley half 74 on the movable side that can approach and can be separated from the pulley half 73 on the fixed side and the pulley half 74 on the movable side is pressed in a direction in which the pulley half on the movable side approaches the pulley half 73 on the fixed side by a centrifugal weight 75 moved on the outside in a radial direction as the number of revolutions of the crankshaft 34 increases.

An output shaft 76 having a parallel axis to the crankshaft 34 is rotatably supported by the case main body 61 and the right cover 63 in the rear of the transmission case 22, the driven pulley 71 is provided with a pulley half 77 on the fixed side supported relatively rotatably by the output shaft 76 and a pulley half 78 on the movable side that can approach and can be separated from the pulley half 77 on the fixed side, and the pulley half 78 on the movable side is pressed toward the pulley half 77 on the fixed side by a spring 79. A clutch 80 for starting is provided between the pulley half 77 on the fixed side and the output shaft 76.

The output shaft 76, an intermediate shaft 81 parallel to the output shaft 76 and the axle 65 are rotatably supported by the rear of the case main body 61 and the right cover 63 in the transmission case 22, the speed reducing gear train 66 is provided between the output shaft 76 and the axle 65 via the intermediate shaft 81, and the rear wheel WR is provided to a right end of the axle 65 protruded on the right side piercing the right cover 63.

Therefore, the torque of the crankshaft 34 is transmitted to the driving pulley 70 and is transmitted from the driving pulley 70 to the rear wheel WR via the V belt 72, the driven pulley 71, the clutch 80 for starting and the speed reducing gear train 66.

When the engine E is driven at low speed, centrifugal force that acts on the centrifugal weight 75 of the driving pulley 70 is small, therefore, groove width between the pulley half 77 on the fixed side and the pulley half 78 on the movable side is reduced by the spring 79 of the driven pulley 71, and the gear ratio is at a low level. When the number of revolutions of the crankshaft 34 is increased from this condition, centrifugal force that acts on the centrifugal weight 75 increases, groove width between the pulley half 73 on the fixed side and the pulley half 74 on the movable side respectively of the driving pulley 70 decreases, and as the groove width between the pulley half 77 on the fixed side and the pulley half 78 on the movable side respectively of the driven pulley 71 is accordingly increased, the gear ratio continuously changes from the low level to a top level.

A kick shaft 83 having a parallel axis to the crankshaft 34 is rotatably supported by the case main body 61 and a left cover 62 in an intermediate part in a longitudinal direction of the transmission case 22 and a kick pedal 84 is fixed to an end protruded from the left cover 62 of the kick shaft 83. In addition, a return spring 85 is provided between the kick shaft 83 and the case main body 61.

In the meantime, a fitting member 87 coaxially opposite to a fitted member 86 provided to the end of the crankshaft 34 is supported by the left cover 62 of the transmission case 22 so that the fitting member can be rotated coaxially with the crankshaft 34 and can be moved in an axial direction of the crankshaft, and a speed increasing gear train 88 is provided between the kick shaft 83 and the fitting member 87. The rotation of the kick shaft 83 is increased by the speed increasing gear train 88 according to stepping on the kick pedal 84 and is transmitted to the fitting member 87, the fitting member 87 is forward rotated until it is fitted to the fitted member 86, and thereby, rotating motive power for starting is transmitted to the crankshaft 34.

Plural vanes 89 for taking cooling air in the transmission chamber 67 by the rotation of the pulley half 73 on the fixed side are fixed to an outside face of the pulley half 73 on the fixed side of the driving pulley 70 and an outside air intake duct 90 for taking cooling air in the transmission chamber 67 from the outside by the rotation of the vanes 89 together with the pulley half 73 on the fixed side is attached to the front of the left cover 62 of the transmission case 22. A reed valve 91 for taking air for ventilation in the crankcase 21 is attached to the left side of the cylinder block 36 in the engine main unit 33.

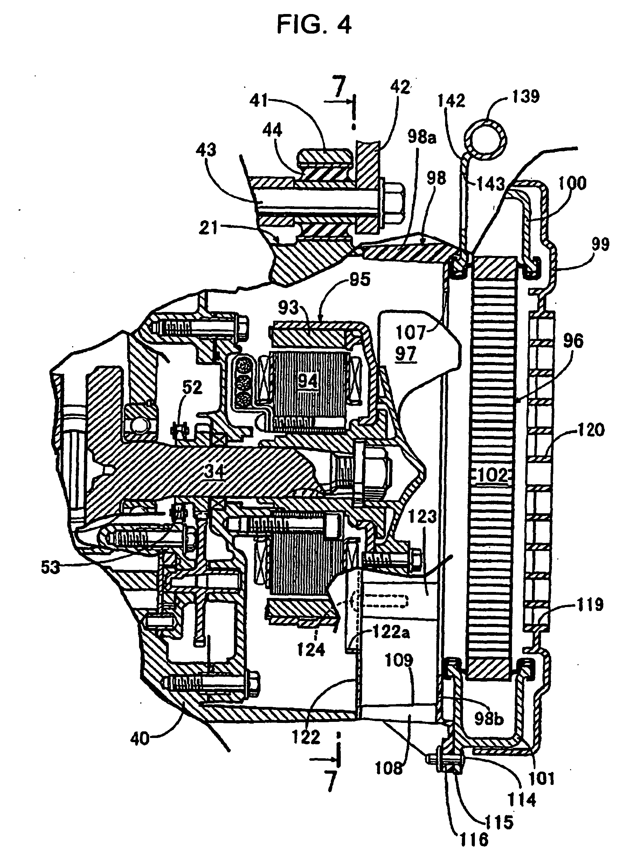

Also referring to Fig. 4, a rotor 93 is fixed to a right end of the crankshaft 34 and a stator 94 forming a generator 95 together with the rotor 93 is fixed to the right case half 40 of the crankcase 21 with the stator surrounded by the rotor 93. A radiator 96 is arranged on the side of the crankcase 21 outside the generator 95 and a cooling fan 97 that sucks cooling wind for the cooling wind to pass the radiator 96 is attached to the right end of the crankshaft 34 with the generator 95 held between the cooling fan and the right case half 40 of the crankcase 21.

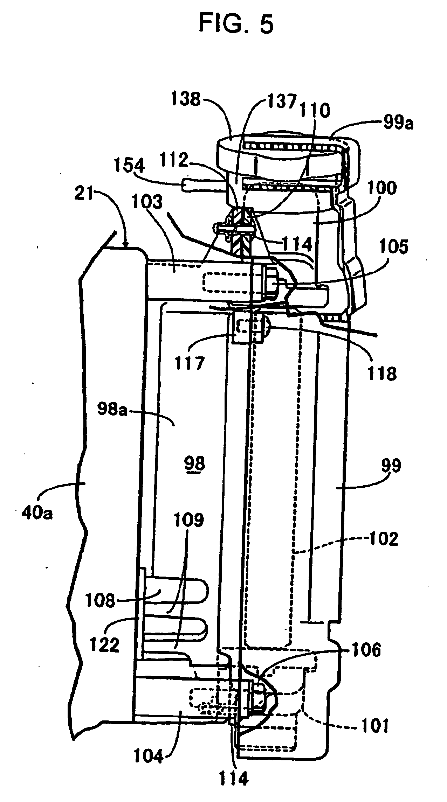

Further, also referring to Fig. 5, a cylindrical supporting case 40a surrounding the generator 95 from the side is integrated with the right case half 40, a shroud 98 for covering the cooling fan 97 from the side is provided between the radiator 96 and the supporting case 40a, and the radiator 96 is covered with a radiator cover 99 made of synthetic resin from the outside.

The radiator 96 is formed by coupling an upper tank 100 and a lower tank 101 via a cooling core 102 and is attached to the right case half 40 of the crankcase 21 provided to the engine main unit 33. That is, a single supporting boss 103 arranged corresponding to the rear of the upper tank 100 and a pair of supporting bosses 104 arranged corresponding to the front and the rear of the lower tank 101 are provided to the right case half 40, the upper tank 100 is fastened to the supporting boss 103 by a bolt 105, and the lower tank 101 is fastened to the supporting bosses 104 by bolts 106.

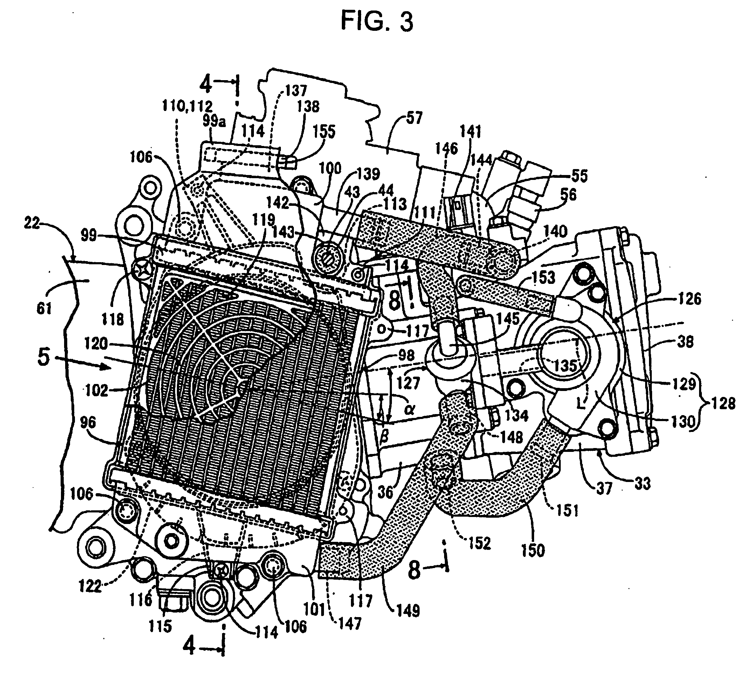

At least a part of the radiator 96, the front of the upper tank 100 in the radiator 96 in this embodiment is arranged on the downside of the supporting shaft 43, the radiator 96 is arranged on the side of the crankcase 21 with a front end arranged in front of the supporting shaft 43, an attitude of the radiator 96 in a state in which the radiator is attached to the crankcase 21 is inclined by an angle α with an axis L of the cylinder bore 35 in the cylinder block 36 of the engine main unit 33 so that the rear is higher as shown in Fig. 3, and in a state in which the engine main unit 33 with the radiator 96 is supported by the body frame F via the supporting shaft 43, the radiator 96 is inclined forward by an angle β with a horizontal plane. In addition, the front of the upper tank 100 is formed so that it is lower than the rear to avoid the supporting shaft 43 and the front of the upper tank 100 in the radiator 96 is arranged on the downside of the supporting shaft 43 in a side view.

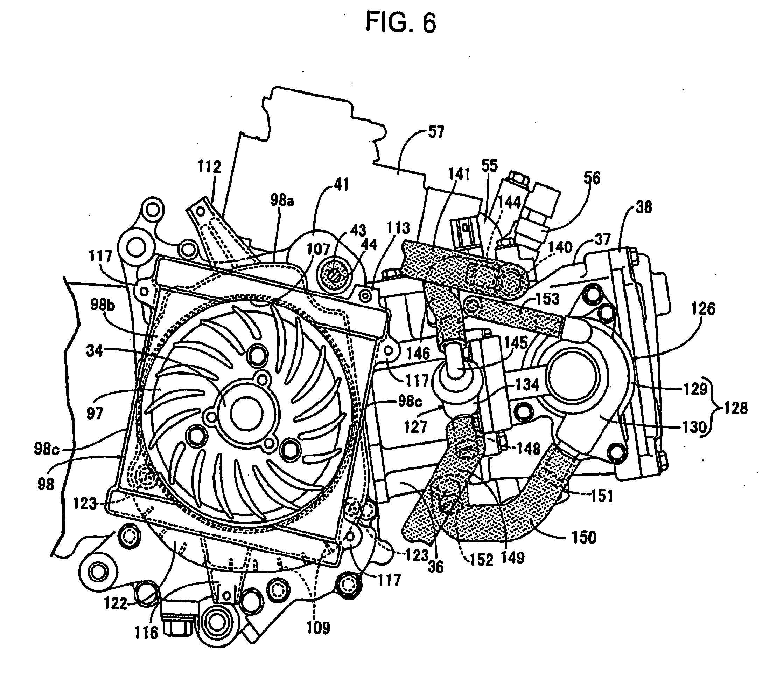

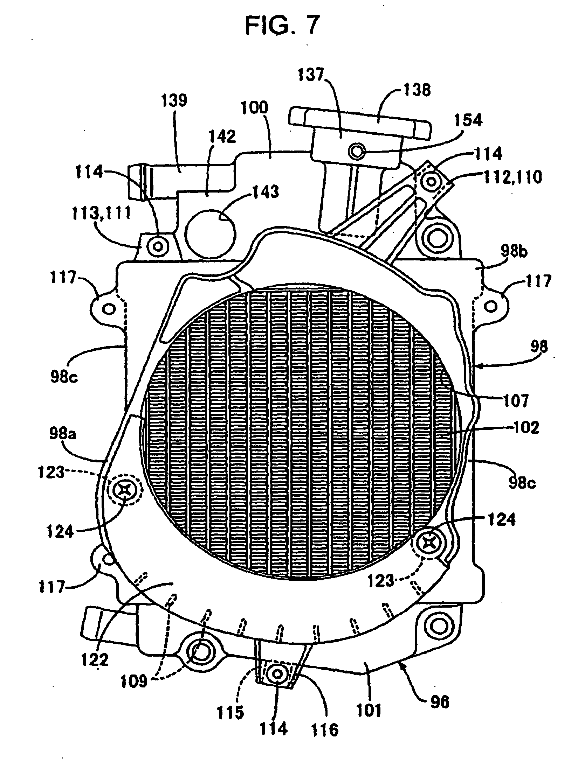

Also referring to Figs. 6 and 7, the shroud 98 is integrally provided with: a cylindrical part 98a that surrounds the cooling fan 97 from the side; a touched plate 98b a circumference of which is touched to an inner surface of the radiator 96 and which is linked with one end of the cylindrical part 98a; and a pair of side plates 98c protruded from the touched plate 98b with the side plates close and opposite to both sides of the radiator 96 in parts except an upper part of the upper tank 100 and a lower part of the lower tank 101, and is made of synthetic resin. A circular opening 107 to which the center on the side of an inner surface of a cooling core 102 in the radiator 96 is opposite is provided to the substantial center of the touched plate 98b coaxially with a rotational axis of the cooling fan 97, that is, the axis of the crankshaft 34, and an exhaust port 108 open downward is provided to a lower part of the cylindrical part 98a. In addition, plural guide projections 109 radially extended from the axis of the opening 107 are protruded at intervals in a circumferential direction of the opening 107 on an inner surface of the touched part 98b in a part corresponding to the exhaust port 108.

The shroud 98 is attached to the radiator 96, each end of attachment arms 112, 113 protruded upward from an upper part of the cylindrical part 98a of the shroud 98 is attached to each support 110, 111 provided to the front and the rear of the upper tank 100 of the radiator 96 by each clip 114, and an end of an attachment arm 116 protruded downward from an intermediate part in a longitudinal direction of the touched plate 98b of the shroud 98 is attached to a support 115 provided to the downside of an intermediate part in a longitudinal direction of the lower tank 101 of the radiator 96 by a clip 114.

The radiator cover 99 is attached to the shroud 98 and is fastened to a pair of supporting projections 117 protruded in positions vertically at an interval of the side plate 98c on the front side out of both side plates 98c of the shroud 98 and to a supporting projection 117 protruded from an upper part of the side plate 98c on the rear side by each screw 118.

1 A four-sided air intake 119, preferably a rectangular air inlet, to which an outside face of the cooling core 102 of the radiator 96 is opposite is formed in the radiator cover 99 and a louver 120 arranged in the air intake 119 is provided to the radiator cover 99.

When the cooling fan 97 is operated, air taken from the air intake 119 passes the cooling core 102 of the radiator 96, cools the radiator 96 and further, is exhausted outside from the exhaust port 108 of the shroud 98.

A current plate 122 for preventing cooling wind from the cooling fan 97 from flowing on the side of the crankcase 21 in a part corresponding to the exhaust port 108 is fixed on the side of the right case half 40 of the crankcase 21 of the exhaust port 108 and the cooling fan 97. The current plate 122 is attached to the shroud 98 by fastening it to a pair of mounting bosses 123 protruded from a lower part of the touched plate 98b of the shroud 98 by each screw 124 and is formed in the shape of a circular arc along a rotational locus of an outermost end in a radial direction of the cooling fan 97 in a side view.

In addition, the generator 95 is arranged between the cooling fan 97 and the crankcase 21, the current plate 122 is arranged outside the generator 95, and a turned part 122a extended on the side of the crankcase 21 from its inner end is integrated with the current plate 122.

The radiator 96 forms a part of a cooling system that enables circulating cooling water in a water jacket 125 (see Fig. 2) provided to the cylinder block 36 and the cylinder head 37 of the engine main unit 33 and the cooling system is provided with: a water pump 126 that supplies cooling water to the water jacket 125; the radiator 96 interposed between the water jacket 125 and a suction opening or inlet 135 (see Fig. 2) of the pump 126; and a thermostat 127 arranged in front of the radiator 96 for switching a state in which cooling water from the water jacket 125 is returned to the water pump 126 without passing the radiator 96 and a state in which cooling water that passes the radiator 96 from the water jacket 125 is returned to the water pump 126 according to the temperature of the cooling water.

A pump case 128 of the water pump 126 includes a case main body 129 fitted and fixed to the cylinder head 37 from its right side and a pump cover 130 fastened to the case main body 129 as shown in Fig. 2 and a pump shaft 131 a rotational axis of which is extended in a lateral direction of the body frame F and which is fluid-tight and rotatably supported by the case main body 129 is coupled to the camshaft 50 coaxially and so that the pump shaft cannot be relatively rotated. In addition, an impeller 133 is fixed to the pump shaft 131 in a pump room 132 formed in the pump case 128.

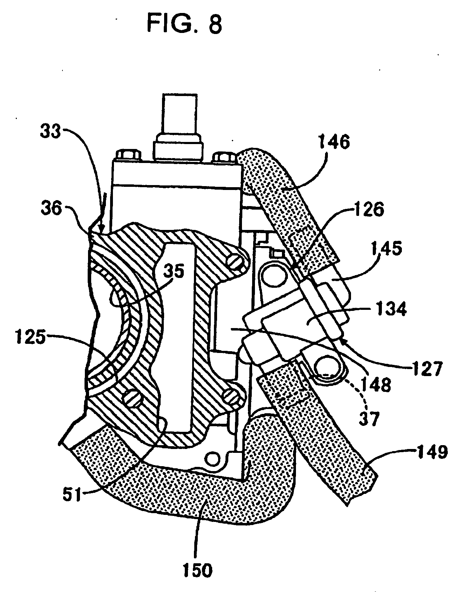

Also referring to Fig. 8, a thermostat case 134 housing the thermostat 127 inside is fastened and fixed to the pump cover 130 of the pump case 128 so that the thermostat case is separated in a longitudinal direction (backward in this embodiment) from an axis of the pump shaft 131 and is overlapped with the pump case 128 in the longitudinal direction, and an axis of the thermostat case 134 is inclined so that the axis on the upside is located more outside.

A water supply pipe 137 extended upward is integrated with the rear of the upper tank 100 of the radiator 96 and a cap 138 openable by turning is installed at an upper end of the water supply pipe 137. An inlet pipe 139 having an axis extending in the longitudinal direction of the body frame F is provided to an intermediate part of the water supply pipe 137 at the back of the supporting shaft 43 with the inlet pipe located on the upside of the supporting shaft 43 in a side view. In the meantime, a leading-out pipe 140 for leading out cooling water from an uppermost end of the water jacket 125 is provided to the cylinder head 37 of the engine main unit 33 with the leading-out pipe located on the downside of the inlet pipe 139 in a side view, the leading-out pipe 140 and the inlet pipe 139 are coupled via a first conduit 141 which is a rubber hose, the first conduit 141 is extended to be higher from the leading-out pipe 140 toward the inlet pipe 139, and is laid so that the first conduit passes the upside of the supporting shaft 43 in a side view.

A flat reinforcing plate 142 is provided between the front of the upper tank 100 and the inlet pipe 139, and a circular opening 143 into which the supporting shaft 43 can be inserted is provided to the reinforcing plate 142 with one end of the supporting shaft 43 opposite in a side view in a state in which the engine main unit 33 is supported by the body frame F via the supporting shaft 43.

A branch connecting pipe 144 is provided to an intermediate part of the leading-out pipe 140. In the meantime, a water jacket-side connecting pipe 145 is protruded inward and diagonally upward from an upper part of the thermostat case 134 the axis of which is inclined so that the axis on the upside is located more outside, and the branch connecting pipe 144 and the water jacket-side connecting pipe 145 are coupled via a second conduit 146 such as a rubber hose for leading cooling water from the water jacket 125 to the side of the thermostat 127.

An outlet pipe 147 is protruded forward from the lower part of the lower tank 101 of the radiator 96 and a radiator-side connecting pipe 148 is protruded outward and diagonally downward from a lower part of the thermostat case 134. The outlet pipe 147 and the radiator-side connecting pipe 148 are coupled via a third conduit 149 such as a rubber hose for leading cooling water from the radiator 96.

One end of a fourth conduit 150 such as a rubber hose for leading cooling water from the water pump 126 is connected to a discharge pipe 151 provided to the pump case 128 and the other end of the fourth conduit 150 is connected to an inlet pipe 152 provided to the cylinder block 36 so that the other end communicates with a lower part of the water jacket 125.

A conduit for air bleeding 153 for bleeding air from an upper part of the pump room 132 in the pump case 128 is connected to an upper part of the pump case 128.

Further, a connecting pipe 154 for connecting a rubber hose is provided to the water supply pipe 137 and is connected to a reservoir (not shown) open to the atmosphere and arranged separately from the radiator 96. When cooling water in the radiator 96 is turned high temperature and is expanded, extra cooling water flows into the reservoir and when the cooling water in the radiator 96 is turned low temperature, the cooling water is returned from the reservoir into the radiator 96. Air accumulated in the water supply pipe 137 is exhausted into the reservoir by the above-mentioned flow of cooling water between the radiator 96 and the reservoir. That is, when the engine E is operated, air bleeding from the cooling system is also performed satisfactorily.

In such a cooling system, when the warming up of the engine E is completed, cooling water discharged from the water pump 126 driven by the camshaft 50 is supplied to the water jacket 125 in the engine main unit 33 through the fourth conduit 150 and after the cooling water cools the engine E while it passes the water jacket 125, it is supplied to the upper tank 100 of the radiator 96 via the first conduit 141. The cooling water the temperature of which lowers while it flows from the upper tank 100 into the lower tank 101 via the cooling core 102 and passes the radiator 96 is returned to the suction opening 135 of the water pump 126 via the third conduit 149 and the thermostat 127. In the meantime, when the engine E is in warming up and the temperature of cooling water is low, the thermostat 127 is operated to circulate the cooling water without passing the radiator 96, the cooling water flows from the water jacket 125 into the water pump 126 via the second conduit 146 and the thermostat 127 without passing the radiator 96, and the temperature promptly rises.

As shown in Figs. 3 and 5, a position regulator 99a that blocks the turning to a released position of the cap 138 is integrated with the radiator cover 99 with the position regulator covering the cap 138. In addition, a cutout 155 via which a part of the cap 188 is opposite to the outside is provided to the position regulator 99a.

Next, to explain the action of this embodiment, the radiator 96 is arranged on the side of the crankcase 21, the cooling fan 97 that sucks cooling wind to pass the cooling water in the radiator 96 is attached to one end of the crankshaft 34 and is arranged inside the radiator 96, the shroud 98 that is provided with the exhaust port 108 in the lower part and covers the cooling fan 97 from the side is provided between the radiator 96 and the supporting case 40a in the right case half 40 of the crankcase 21, and the current plate 122 for preventing cooling wind from the cooling fan 97 from flowing on the side of the crankcase 21 in the part corresponding to the exhaust port 108 is fixed not to the side of the exhaust port 108 and the cooling fan 97 but to the side of the crankcase 21.

Therefore, as cooling wind sucked by the cooling fan 97 and passing the radiator 96 is prevented from flowing from the cooling fan 97 to the side of the crankcase 21 in the vicinity of the exhaust port 108 of the shroud 98 by the current plate 122 and smoothly flows into the exhaust port 108, the cooling efficiency of the radiator 96 can be enhanced.

As the current plate 122 is attached to the shroud 98 and the shroud 98 to which the current plate 122 is attached can be attached to the crankcase 21, the current plate 122 never obstructs when the cooling fan 97 is attached to the crankshaft 34, compared with a case that the current plate 122 is attached to the crankcase 21 and ease of assembly can be enhanced.

In addition, as the current plate 122 is formed in the shape of the circular arc along the rotational locus of the outermost end in the radial direction of the cooling fan 97 in the side view, a flow of cooling wind from the cooling fan 97 to the side of the crankcase 21 can be more effectively blocked.

Further, as the generator 95 is arranged between the cooling fan 97 and the crankcase 21 and the turned part 122a extended from the inner end of the current plate 122 to the side of the crankcase 21 is integrated with the current plate 122 arranged outside the generator 95, cooling wind can more smoothly flow on the side of the exhaust port 108 without causing turbulence in a small quantity of cooling wind that flows between the generator 95 and the current plate 122 by making the turned part 122a opposite to the periphery of the generator 95.

Besides, the leading-out pipe 140 provided to the cylinder head 37 of the engine main unit 33 for leading out cooling water from the uppermost part of the water jacket 125 of the engine main unit 33 and the inlet pipe 139 provided to the upper tank 100 of the radiator 96 on the upside of the supporting shaft 43 for rockably supporting the power unit P including the engine main unit 33 by the body frame F are coupled via the first conduit 141 that passes the upside of the supporting shaft 43 in the side view to be higher from the leading-out pipe 140 to the side of the inlet pipe 139.

Therefore, air in the water jacket 125 is led on the side of the radiator 96 via the first conduit 141, no conduit dedicated to air bleeding is required, interference between the first conduit 141 and the supporting shaft 43 can be avoided, the number of parts is reduced, and a conduit layout around the radiator 96 can be simplified.

In addition, as the supporting shaft 43 is arranged at the back of the front end of the radiator 96, the inclination of the first conduit 141 is inhibited and the length of the first conduit 141 can be reduced.

Besides, as the opening 143 into which the supporting shaft 43 can be inserted is provided to the radiator 96 with one end of the supporting shaft 43 opposite to the opening in the side view in the state in which the engine main unit 33 is supported by the body frame F via the supporting shaft 43, the radiator 96 is not required to be arranged in a position that does not obstruct work for inserting the supporting shaft 43 when the engine main unit 33 to the crankcase 21 of which the radiator 96 is attached is mounted on the body frame F, the radiator 96 can be arranged in an optimum position, and a degree of freedom in the layout can be enhanced.

Besides, as the inlet pipe 139 is provided to the upper tank 100 of the radiator 96 with the inlet pipe having an axis extending in the longitudinal direction of the body frame F and located on the upside of the supporting shaft 43 in the side view, an overhang in front of the inlet pipe 139 from the radiator 96 is inhibited and the whole radiator 96 can be compacted.

Besides, as the thermostat 127 provided with the thermostat case 134 the axis of which is inclined so that the upside is located more outside is arranged in front of the radiator 96, the water jacket-side connecting pipe 145 for connecting the second conduit 146 for leading cooling water from the water jacket 125 is protruded inward and diagonally upward from the upper part of the thermostat case 134 and the radiator-side connecting pipe 148 for connecting the third conduit 149 for leading cooling water from the radiator 96 is protruded outward and diagonally downward from the lower part of the thermostat case 134, the space for which the thermostat 127 accounts in the lateral direction of the body frame F is reduced, the thermostat 127 can be compacted, and in addition, the length of the second conduit 146 connected to the water jacket-side connecting pipe 145 for leading cooling water from the water jacket 125 and the length of the third conduit 149 connected to the radiator-side connecting pipe 148 for leading cooling water from the radiator 96 can be possibly reduced.

The water pump 126 is attached to the outer side of the cylinder head 37 of the engine main unit 33 with the pump shaft 131 extended in the lateral direction of the body frame F, as the thermostat case 134 is fixed to the pump case 128 of the water pump 126 with the thermostat case separated from the axis of the pump shaft 131 in the longitudinal direction and with the thermostat case overlapped with the pump case 128 in the longitudinal direction, the conduits 141, 146, 149, 150 related to the water pump 126 and the thermostat 127 can be laid out compactly in the lateral direction of the body frame F.

A crank chamber 215 is formed in the crankcase 21, a part of exhaust gas combusted in a combustion chamber 216 to which a top of the piston 48 is opposite and which is formed between the cylinder block 36 and the cylinder head 37 leaks into the crank chamber 215 out of clearance between an inner face of the cylinder bore 35 and the piston 48 as blowby gas, blowby gas in the crank chamber 215 is refluxed from the head cover 38 of the engine main unit 33 to the intake system 59 by taking fresh air from the intake system 59 outside the engine main unit 33 in the crank chamber 215, and the blowby gas is combusted in the combustion chamber 216 again.

An upstream end of a fresh air intake pipe 217 for conducting fresh air from the outside of the engine main unit 33 is connected to a purification chamber in the air cleaner 58 in the intake system 59, a flow control valve 218 that controls a flow rate of fresh air is provided to the fresh air intake pipe 217, and a reed valve 219 that takes fresh air in the crank chamber 215 by negative pressure in the crank chamber 215 formed in the crankcase 21 and prevents reflux from the crank chamber 215 to the side of the fresh air intake pipe 217 is connected to a downstream end of the fresh air intake pipe 217. One end of a blowby gas return pipe 220 for conducting blowby gas to an upstream side of the throttle valve 60 of the intake system 59 is connected to the head cover 38 in the engine main unit 33.

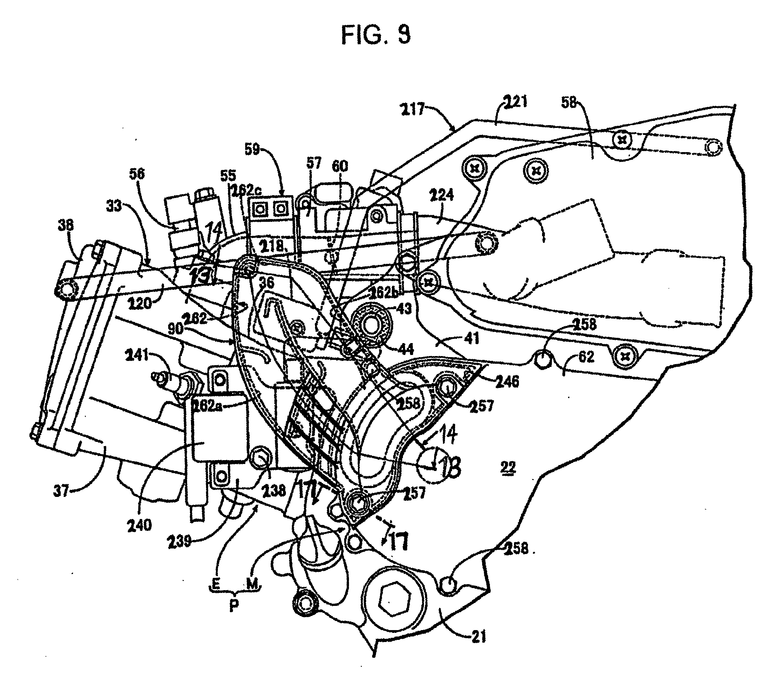

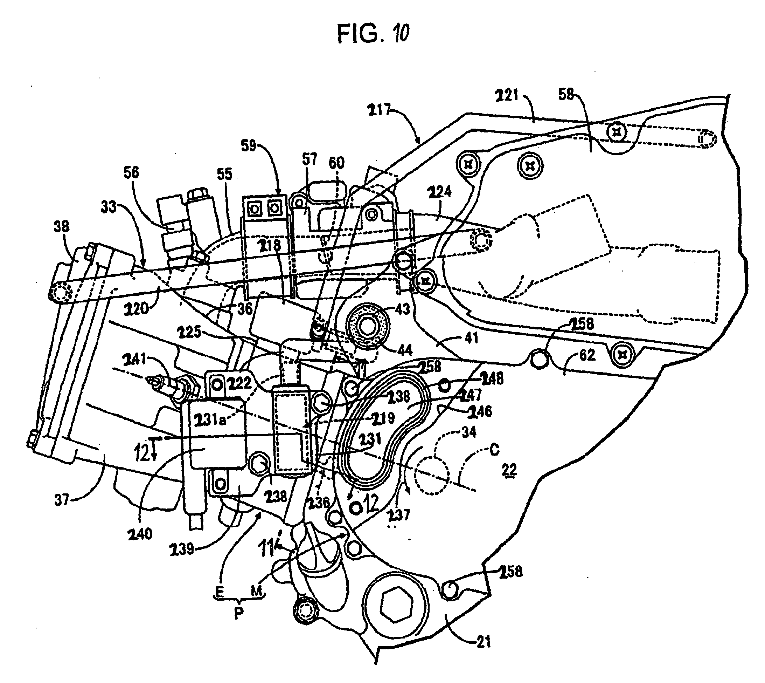

As shown in Figs. 9 and 10, the fresh air intake pipe 217 is configured by: a pipe on the upstream side 221 an upstream end of which is connected to the purification chamber of the air cleaner 58 and a downstream end of which is connected to the flow control valve 218; and a pipe on the downstream side 222 an upstream end of which is connected to the flow control valve 218 and a downstream end of which is connected to the reed valve 219. An upstream end of the blowby gas return pipe 220 is connected to the head cover 38 so as to communicate with a breather 223 (see Fig. 2) formed in the head cover 38 and a downstream end of the blowby gas return pipe 220 is connected to a connecting tube 224 that connects the throttle body 57 and the air cleaner 58 respectively in the intake system 59.

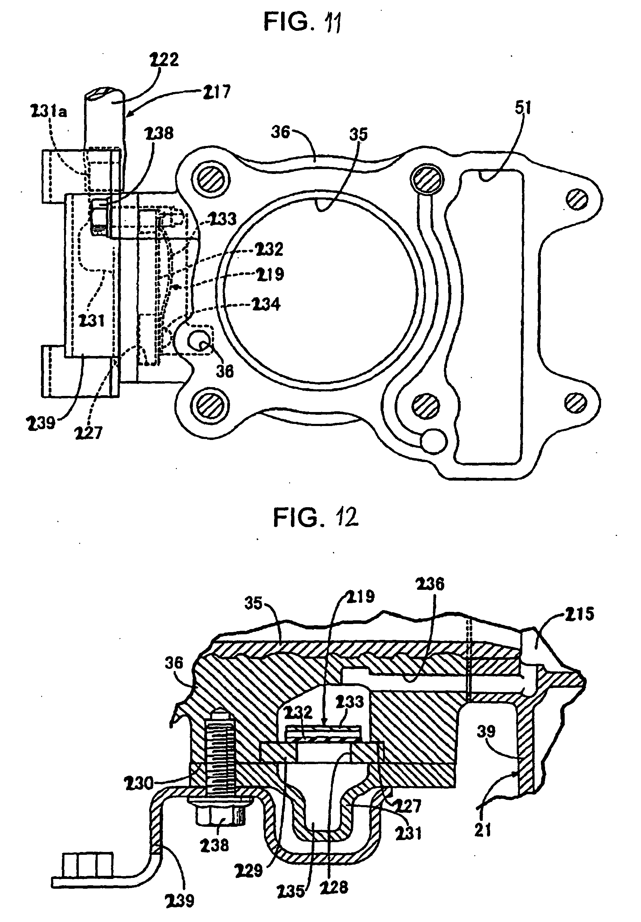

Also referring to Figs. 11 and 12, the reed valve 219 is attached to an outside face of the cylinder block 36 on the side of the other end in the axial direction of the crankshaft 34, that is, on the reverse side to the chain passage 51.

In addition, as shown in Figs. 9 and 10, the flow control valve 218 is arranged on the upside of the reed valve 219 in a side view and is attached to a stay 225 fixed to an upside surface of the cylinder block 36, and a supporting shaft 43 for rockably supporting the engine main unit 33 by the body frame F is arranged close to the flow control valve 218 at the back of the flow control valve.

A concave portion 227 is provided to the outside face of the cylinder block 36 and an installation seat 230 for the reed valve is provided with the installation seat surrounding the concave portion 227. The reed valve 219 is provided with a frame 229 having a valve hole 228 in the center and fitted to the concave portion 227, a valve cover 231 fastened to the installation seat 230 for the reed valve, holding the frame 229 between the valve cover and the cylinder block 36, a flexible valve element 232 a base of which is attached to an inner surface of the frame 229 so that an end of the flexible valve element can close the valve hole 228, and a regulating plate 233 that regulates an end moving in a direction in which the side of the end of the flexible valve element 232 is isolated from the frame 229 and a base of which is fastened to the frame 229 by a screw 234 together with the flexible valve element 232.

An inlet port 235 communicating with the valve hole 228 is formed between the frame 229 and the valve cover 231 and a connecting pipe 231a communicating with the inlet port 235 is integrated with the valve cover 231. A downstream end of the pipe 222 on the downstream side of the fresh air intake pipe 217 is connected to the connecting pipe 231a.

A communicating passage 236 for conducting air from the reed valve 219 to the crank chamber 215 is provided to the cylinder block 36 and the left case half 39 in the crankcase 21 with one end open to the concave portion 227 and the other end of the communicating passage 236 is open to the crank chamber 215 in the crankcase 21.

In addition, the communicating passage 236 is open to the crank chamber 215 on the downside of the cylinder axis C of the engine main unit 33 in a side view as shown in Fig. 10 and a rotational direction 237 of the crankshaft 34 is set in a part corresponding to an opening to the crank chamber 215 of the communicating passage 236 when the vehicle advances so that the rotational direction is downward.

The valve cover 231 forming a part of the reed valve 219 is fastened to the installation seat 230 for the reed valve of the cylinder block 36 by two bolts 238, 238 for example and a stay 239 is also fastened to the cylinder block 36 by the bolts 238. That is, the stay 239 arranged with the stay holding the valve cover 231 between the stay and the cylinder block 36 is fastened to the cylinder block 36 jointly with the valve cover 231 by the bolts 238.

In addition, an ignition coil 240 is attached to the stay 239 close to an ignition plug 241 attached to a left side wall of the cylinder head 37.

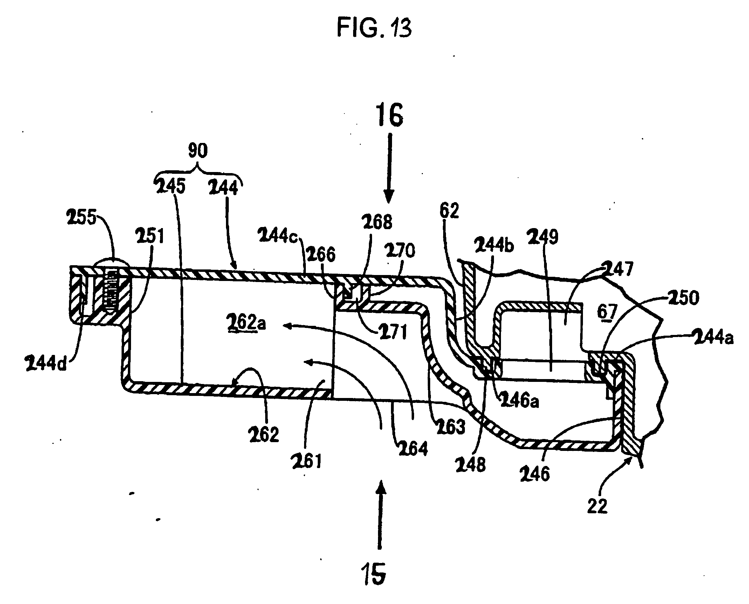

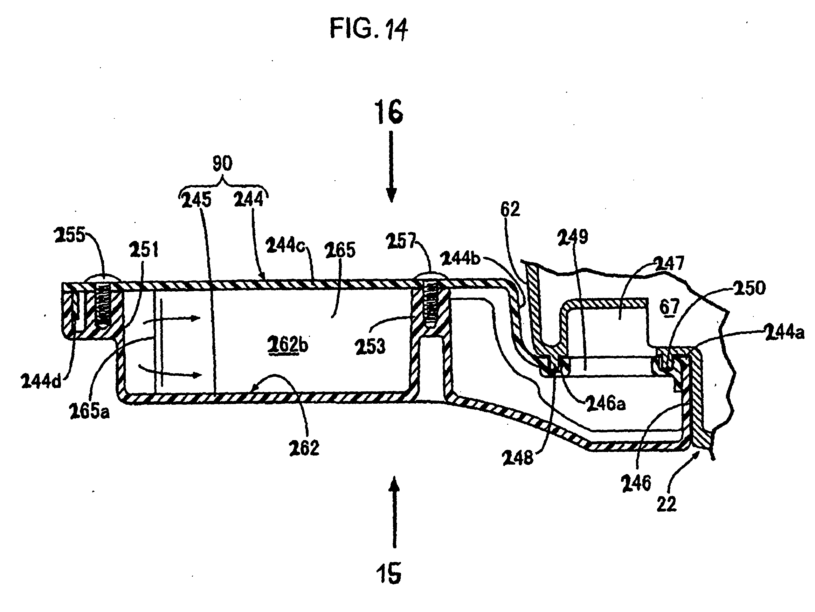

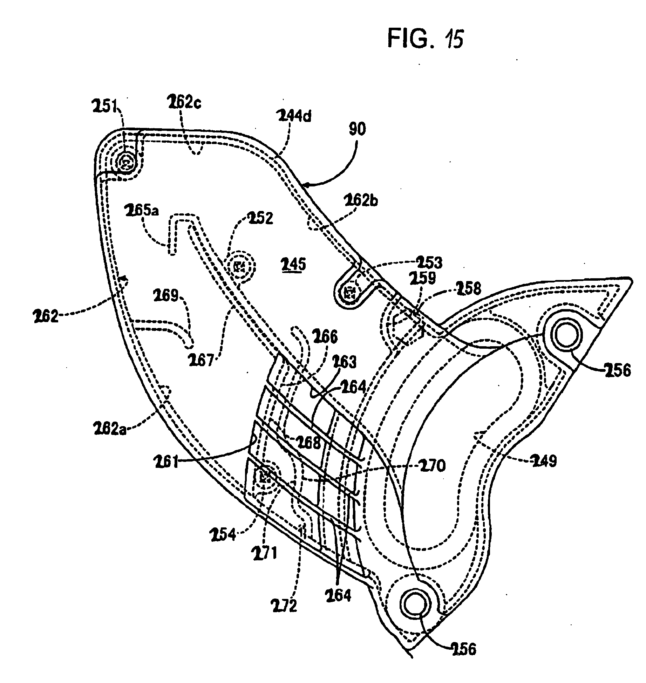

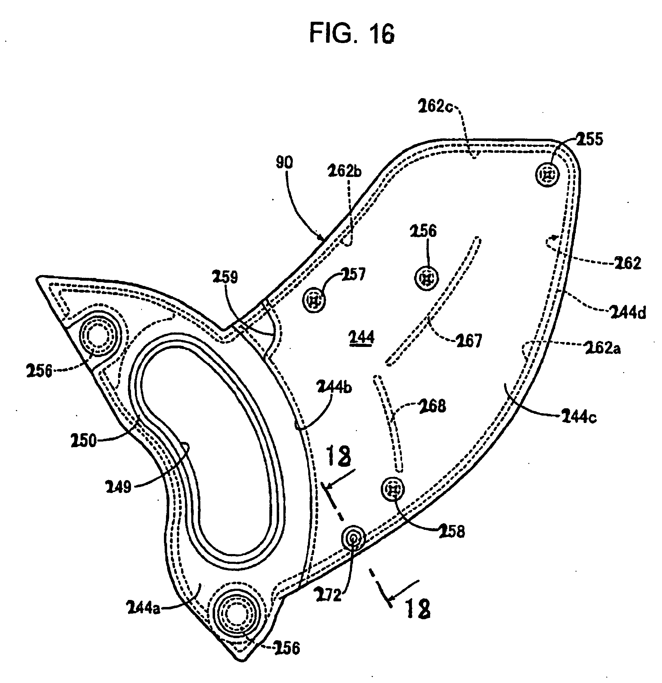

As shown in Figs. 13 to 16, the outside air intake duct 90 linked with the front of the left cover 62 of the transmission case 22 is formed by fastening a first duct half 244 made of synthetic resin and a second duct half 245 related to the first duct half 244, arranged on the reverse side to the engine main unit 33 and made of synthetic resin, and the rear of the outside air intake duct 90 extended forward and upward from the front of the transmission case 22 is linked with the front of the transmission case 22.

The first duct half 244 is integrally provided with: a first flat part 244a touched to the side of the front of the left cover 62 in the transmission case 22; a side part 244b one end of which is linked with the front of the first flat part 244a and which is extended on the side of the engine main unit 33 closely opposite to a front end wall of the left cover 62; and a second flat part 244c extended forward and upward from the other end of the side part 244b, and a projection 244d protruded toward the side of the second duct half 245 is integrated with the substantially overall periphery of the first duct half 244.

A concave portion 246 into which the rear of the outside air intake duct 90 is fitted and which is open forward and sideways is provided to the front of the left cover 62 in the transmission case 22. In addition, an inlet 247 open backward in the front of the transmission chamber 67 so as to take cooling air from the rear of the outside air intake duct 90 in the transmission chamber 67 is provided to the side 246a opposite to the outer side of the concave portion 246, and an endless fitting projection 248 surrounding the inlet 247 is integrated. In the meantime, a communicating hole 249 extended to the inlet 247 is provided to the first flat part 244a of the first duct half 244 and an endless fitting concave portion 250 into which the fitting projection 248 is fitted is provided with the fitting concave portion surrounding the communicating hole 249.

The second duct half 245 is basically formed in the shape of a box open toward the side of the first duct half 244, the periphery of the second duct half 245 is touched to the periphery of the first duct half 244, and the projection 244d of the first duct half 244 is fitted to the periphery of the second duct half 245.

Each boss 251, 252, 253, 254 is provided in plural locations on the side of an inner surface of the second duct half 245, for example, in four locations, the first and second duct halves 244, 245 are mutually fastened by screwing each screw 255, 256, 257, 258 piercing the first duct half 244 in a position individually corresponding to the bosses 251 to 254 on each boss 251 to 254, and the outside air intake duct 90 is formed.

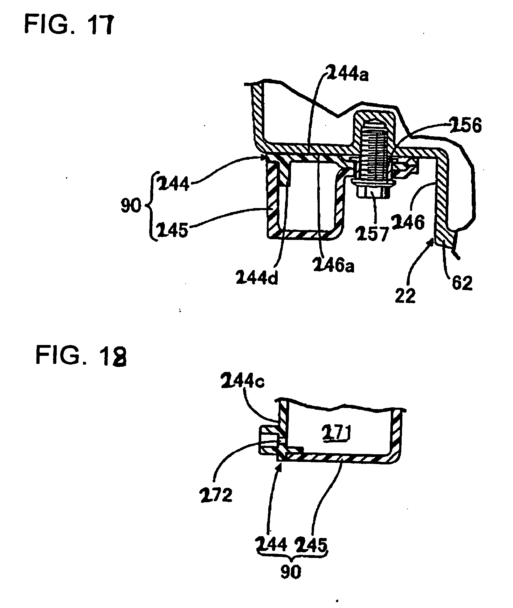

Also referring to Fig. 17, each collar 256, 256 is inserted in two locations vertically holding the inlet 247 in each rear of the first and second duct halves 244, 245, each bolt 257, 257 inserted into each collar 256 is screwed on the side 246a of the front of the left cover 62 in the transmission case 22, and hereby, the rear of the outside air intake duct 90 is fastened to the front of the left cover 62 in the transmission case 22. As the outside air intake duct 90 in a state fastened to the transmission case 22 is arranged in a position overlapped with one of plural bolts 258 for fastening the left cover 62 in the transmission case 22 to the case main body 61 in a side view, a recess 259 for avoiding interference with the bolt 258 is provided to the first duct half 244 of the outside air intake duct 90.

The outside air intake duct 90 in a state attached to the transmission case 22 is arranged so that the outside air intake duct hides the flow control valve 218 and the reed valve 219 respectively attached to the cylinder block 36 of the engine main unit 33 as a component annexed to the engine from the side as shown in Fig. 9.

An outside air inlet 261 for taking air from the outside is provided to a part close to the transmission case 22 of the outside air intake duct 90, and inside the outside air intake duct 90, an air passage 262 from the outside air inlet 261 to the inlet 247 of the transmission case 22 is formed.

The outside air inlet 261 is provided to the side on the reverse side to the engine main unit 33 of the outside air intake duct 90, that is, the second duct half 245.
That is, a concave portion 263 concave inside is provided to the downside of a part close to the transmission case 22 of the second duct half 245 and the outside air inlet 261 open to the back and opposite to the concave portion 263 is formed by cutting off a side wall on the front side of the concave portion 263. In addition, plural guide walls 264 arranged vertically at intervals in the concave portion 263 are integrated with the second duct half 245 so as to conduct outside air toward the outside air inlet 261.

A first bulkhead 265 ranging to an upper side wall of the concave portion 263, extended forward and upward and having a U-shaped return part 265a returning to the back at a front end, and a second bulkhead 266 connecting a lower side wall of the second duct half 245 and the first bulkhead 265 in a position corresponding to the outside air inlet 261 are integrated with an inner surface of the second duct half 245, and the first and second bulkheads 265, 266 are touched to the second flat part 244c of the first duct half 244. In the meantime, a third bulkhead 267 touched to a part of the first bulkhead 265 from the downside and a fourth bulkhead 268 touched to the second bulkhead 266 from the back are integrated with an inner surface of the second flat part 244c of the first duct half 244.

The air passage 262 formed in the outside air intake duct 90 includes: a first passage part 262a a front end of which ranges to the outside air inlet 261 and which is extended forward and diagonally upward among the first and third bulkheads 265, 267 and the lower side of the second duct half 245; a second passage part 262b which is extended backward and diagonally downward among the first and third bulkheads 265, 267 and the upper side of the second duct half 245, a rear end of which communicates with the communicating hole 249 and which is adjacently arranged on the upside of the first passage part 262a; and a third passage part 262c connecting the fronts of the first and second passage parts 262a, 262b. The air passage 262 is formed in a U shape from the first passage part 262a to the side of the transmission case 22 via the third passage part 262c and the second passage part 262b.

In addition, a connection of the first and second passage parts 262a, 262b, that is, the third passage part 262c is arranged on the upside of the cylinder block 36 in the engine main unit 33 in a side view as clearly shown in Fig. 9.

A baffle 269 protruded upward from the lower side wall at an interval on the front side from the outside air inlet 261 is integrated with the inner surface of the second duct half 245 and water that penetrates in the air passage 262 from the outside air inlet 261 is prevented from flowing on the side of the second passage part 262b through an upper part of the first passage part 262a and the lower side wall by the baffle 269 and the return part 265a at the front end of the first bulkhead 265.

Further, a guidance wall 270 an upper end of which is protruded upward from a lower side wall of the second passage part 262b is integrated with the second duct half 245 with the guidance wall located at the back of the fourth bulkhead 268, and a drain hole 272 open to a lower part of a drain passage 271 formed between the guidance wall 270 and the fourth bulkhead 268 is provided to a lower part of the second flat part 244c in the first duct half 244 as shown in Fig. 18. Therefore, water that penetrates in the second passage part 262b is guided to the side of the drain passage 271 at the upper end of the guidance wall 270 and is exhausted outside from the drain hole 272.

Next, to explain the action of this embodiment, the flow control valve 218 is provided to the fresh air intake pipe 217 for conducting fresh air from the outside of the engine main unit 33, for example, from the air cleaner 58 so as to control a flow rate of fresh air in the fresh air intake pipe 217, the reed valve 219 for taking fresh air in the crank chamber 215 by negative pressure in the crank chamber 215 in the crankcase 21 and preventing reflux from the crank chamber 215 to the side of the fresh air intake pipe 217 is connected to the downstream end of the fresh air intake pipe 217, the reed valve 219 is attached to the outside face of the cylinder block 36 on the reverse side to the chain passage 51 in the axial direction of the crankshaft 34, and the flow control valve 218 is arranged on the upside of the reed valve 219 in the side view.

Therefore, not only the working of the installation seat 230 for the reed valve for attaching the reed valve 219 to the cylinder block 36 can be simplified but the flow control valve 218 can be arranged in vacant space on the upside of the cylinder block 36, enhancing a degree of freedom in the arrangement. Therefore, the ease of assembly of the flow control valve 218 is enhanced and the connection of piping to the flow control valve 218 is also facilitated. As the reed valve 219 is attached to the outside face of the cylinder block 36, the communicating passage 236 connecting the crank chamber 215 and the reed valve 219 is formed in the cylinder block 36 and the crankcase 21 and oil in the crank chamber 215 can be prevented from directly adhering to the reed valve 219.

Besides, the engine main unit 33 is mounted on the body frame F with the cylinder axis C inclined so that the front is higher, the communicating passage 236 for conducting air from the reed valve 219 to the crank chamber 215 is open to the crank chamber 215 on the downside of the cylinder axis C in the side view, as the rotational direction 237 of the crankshaft 34 when the vehicle advances is set in the part corresponding to the opening to the crank chamber 215 of the communicating passage 236 so that the rotational direction is downward, the communicating passage 236 is open to the crank chamber 215 in the location in which a splash of oil by the rotation of the crankshaft 34 is hardly dispersed, and the penetration of oil in the communicating passage 236 can be effectively inhibited.

Besides, as the supporting shaft 43 for rockably supporting the engine main unit 33 by the body frame F is arranged close to the flow control valve 218 at the back of the flow control valve, the supporting shaft 43 is arranged on the upside of the crankcase 21, the whole power unit P including the engine E can be compacted, and in addition, the fluctuation of the flow control valve 218 can be possibly inhibited.

Further, as the ignition coil 240 is attached to the stay 239 fastened to the cylinder block 36 jointly with the valve cover 231 forming a part of the reed valve 219, the ignition coil 240 is arranged in vacant space close to the ignition plug 241, and the efficient arrangement of the ignition coil 240 is enabled.

Besides, as the outside air intake duct 90 for taking cooling wind in the transmission case 22 housing the belt type continuously variable transmission 64 and extended backward is linked with the transmission case 22, the rear of the outside air intake duct 90 extended forward and upward from the front of the transmission case 22 is linked with the front of the transmission case 22, the outside air inlet 261 for taking air from the outside is provided to the part close to the transmission case 22 of the outside air intake duct 90 and the U-shaped air passage 262 from the outside air inlet 261 to the transmission case 22 provided with the first passage part 262a extended forward and diagonally upward from the outside air inlet 261 and the second passage part 262b extended backward from the front end of the first passage part 262a toward the side of the transmission case 22 is formed in the outside air intake duct 90, the length of the air passage 262 having labyrinth structure in the outside air intake duct 90 can be set to be long, and dust-proof and water-proof properties can be enhanced. In addition, as the outside air intake duct 90 is extended forward and upward from the front of the transmission case 22 and is linked with the front of the transmission case 22, water can be possibly prevented from flowing from the outside air intake duct 90 into the transmission case 22 when the transmission case 22 is flooded.

Besides, as the outside air inlet 261 is provided to the side on the reverse side to the engine main unit 33 of the outside air intake duct 90, the effect of heat radiation from the engine main unit 33 is reduced and outside air the temperature of which is low can be effectively taken, in addition, as the air passage 262 in the outside air intake duct 90 has the U-shaped labyrinth structure, mud and water can be prevented from penetrating into the transmission case 22 even if the outside air inlet 262 is open outside the motorcycle.

Besides, as the outside air intake duct 90 is arranged so that the outside air intake duct hides the flow control valve 218 and the reed valve 219 respectively provided to the engine main unit 33 from the side, not only the appearance seems good but the flow control valve 218 and the reed valve 219 can be protected from mud and water.

Further, as the connection of the first and second passage parts 262a, 262b, that is, the third passage part 262c is arranged on the upside of the cylinder block 36 in the side view, the penetration of a foreign matter into the transmission case 22 can be effectively prevented even if the foreign matter such as mud and water penetrates the outside air intake duct 90.

The embodiments of the invention have been described above, however, the invention is not limited to the embodiments and various design changes without deviating from the invention disclosed in the scope of the claims are allowed.

For example, in the embodiment, the case applied to the scooter type motorcycle is described, however, the invention can be also applied to another small-sized vehicle such as a three-wheeled motorcycle.

### Reference Numerals

- 21: Crankcase
- 33: Engine main unit
- 34: Crankshaft
- 36: Cylinder block
- 43: Supporting shaft
- 96: Radiator
- 40: Camshaft
- 51: Chain passage
- 52: Cam chain
- 59: Intake system
- 60: Throttle valve
- 100: Upper tank
- 101: Lower tank
- 102: Cooling core
- 125: Water jacket
- 126: Water pump
- 127: Thermostat
- 128: Pump case
- 131: Pump shaft
- 134: Thermostat case
- 139: Inlet pipe
- 140: Leading-out pipe
- 141: First conduit
- 143: Opening
- 145: Water jacket-side connecting pipe
- 146: Second conduit
- 148: Radiator-side connecting pipe
- 149: Third conduit
- 215: Crank chamber
- 217: Fresh air intake pipe
- 218: Flow control valve
- 219: Reed valve
- 220: Blowby gas return pipe
- 236: Communicating passage
- 237: Rotational direction
- 231: Valve cover
- 239: Stay
- 240: Ignition coil
- C: Cylinder axis
- F: Body frame

## Claims

1. A motorcycle having a cooling system of the engine, comprising:
an engine main unit (33) provided with a water jacket (125) vertically rockably supported by a body frame (F) via a supporting shaft (43), and
a radiator (96) in which:
an upper tank (100) and a lower tank (101) are coupled via a cooling core (102), and
at least a part of said radiator is arranged below the supporting shaft (43) when viewed in a side view ;
said radiator (96) being supported by a side of the crankcase (21), said crankcase forming a part of the engine main unit (33),
wherein the radiator (96) is arranged on the side of the crankcase (21) with a front end of said upper tank (100) of said radiator arranged in front of the supporting shaft (43),
wherein said front end of said upper tank (100) and said front of the supporting shaft (43) are defined versus a front of said motorcycle;
wherein said support shaft (43) is arranged along a lateral direction to the body frame;
wherein a plane of said radiator is inclined forward by an angle (β) versus a horizontal plane, so that the rear of said upper tank (100) said radiator is higher;
wherein a leading-out pipe (140) that is provided to the engine main unit (33) for leading out cooling water from an uppermost part of the water jacket (125) of the engine main unit (33), and
an inlet pipe (139) that is provided to the upper tank (100) of the radiator (96) on the upside of the supporting shaft (43) and said leading-out pipe (140) are coupled via a conduit (141) passing the upside of the supporting shaft (43) in a side view to be higher from the leading-out pipe (140) to the side of the inlet pipe (139),
said inlet pipe (139) having an axis extending in a longitudinal direction of the body frame (F), and
wherein said front end of said upper tank (100) is arranged at the front side of the rear wheel (WR) of a motorcycle.

2. The motorcycle having a cooling system of the engine according to Claim 1, wherein an opening (143) into which the supporting shaft (43) can be inserted is provided to the radiator (96) with one end of the supporting shaft (43) opposite to the opening in a side view in a state in which the engine main unit (33) is supported by the body frame (F) via the supporting shaft (43).

3. The motorcycle having a cooling system of the engine according to any of Claims 1 to 2, wherein:
a thermostat (127) provided with a thermostat case (134) an axis of which is inclined so that the upside is located outside is arranged in front of the radiator (96);
a water jacket-side connecting pipe (145) for connecting a second conduit (146) for leading cooling water from the water jacket (125) is protruded inward and diagonally upward from an upper part of the thermostat case (134); and
a radiator-side connecting pipe (148) for connecting a third conduit (149) for leading cooling water from the radiator (96) is protruded outward and diagonally downward from a lower part of the thermostat case (134).

4. The motorcycle having a cooling system of the engine according to Claim 3, wherein the thermostat case (134) is fixed to a pump case (128) of a water pump (126) attached to the outer side of the engine main unit (33) with a rotational axis of a pump shaft (131) in a lateral direction of the body frame (F) so that the thermostat case is separated in a longitudinal direction from the axis of the pump shaft (131) and is overlapped with the pump case (128) in the longitudinal direction.

## Patentansprüche

1. Motorrad mit einem Motorkühlsystem, das aufweist:
eine Motorhaupteinheit (33), die mit einem Wasserkühlmantel (125) versehen ist, der von einem Karosserierahmen (F) über eine Tragwelle (43) vertikal schwingbar gelagert ist, und
einen Kühler (96), in dem:
ein oberer Behälter (100) und ein unterer Behälter (101) über einen Kühlern (102) verbunden sind, und
wobei wenigstens ein Teil des Kühlers in einer Seitenansicht gesehen unterhalb der Tragwelle (43) angeordnet ist;
der Kühler (96) von einer Seite des Kurbelgehäuses (21) gehalten wird, wobei das Kurbelgehäuse einen Teil der Motorhaupteinheit (33) bildet,
wobei der Kühler (96) auf der Seite des Kurbelgehäuses (21) angeordnet ist,
wobei ein vorderes Ende des oberen Behälters (100) des Kühlers vor der Tragwelle (43) angeordnet ist,
wobei das vordere Ende des oberen Behälters (100) und die Vorderseite der Tragwelle (43) bezüglich einer Vorderseite des Motorrads definiert sind;
wobei die Tragwelle (43) entlang einer seitlichen Richtung des Karosserierahmens angeordnet ist;
wobei eine Ebene des Kühlers um einen Winkel (β) gegen eine Horizontalebene nach vorne geneigt ist, so dass die Rückseite des oberen Behälters (100) des Kühlers höher ist;
wobei eine Ausleitungsrohrleitung (140) an der Motorhaupteinheit (33) bereitgestellt ist, um Kühlwasser von einem obersten Teil des Wasserkühlmantels (125) der Motorhaupteinheit (33) auszuleiten, und
wobei eine Einleitungsrohrleitung (139), die an dem oberen Behälter (100) des Kühlers (96) auf der Oberseite der Tragwelle (43) bereitgestellt ist, und die Ausleitungsrohrleitung (140) über ein Leitungsrohr (141), das in einer Seitenansicht durch die Oberseite der Tragwelle (43) geht, um von der Ausleitungsrohrleitung (140) zu der Seite der Einleitungsrohrleitung (139) höher zu sein, verbunden sind,
wobei die Einleitungsrohrleitung (139) eine Achse hat, die sich in einer Längsrichtung des Karosserierahmens (F) erstreckt, und
wobei das vordere Ende des oberen Behälters (100) auf der Vorderseite des Hinterrads (WR) eines Motorrads angeordnet ist.

2. Motorrad mit einem Motorkühlsystem gemäß Anspruch 1, wobei eine Öffnung (143), in welche die Tragwelle (43) eingesetzt werden kann, an dem Kühler (96) bereitgestellt ist, wobei ein Ende der Tragwelle (43) der Öffnung abgewandt ist in einer Seitenansicht in einem Zustand, in dem die Motorhaupteinheit (33) über die Tragwelle (43) von dem Karosserierahmen (F) gehalten wird.

3. Motorrad mit einem Motorkühlsystem gemäß einem der Ansprüche 1 bis 2, wobei:
ein Thermostat (127), der mit einem Thermostatgehäuse (134) versehen ist, dessen Achse derart geneigt ist, dass die sich außerhalb befindende Oberseite vor dem Kühler (96) angeordnet ist;
eine wasserkühlmantelseitige Verbindungsrohrleitung (145) zum Verbinden eines zweiten Leitungsrohrs (146) zum Leiten von Kühlwasser von dem Wasserkühlmantel (125) nach innen und diagonal aufwärts von einem oberen Teil des Thermostatgehäuses (134) vorsteht; und
eine kühlerseitige Verbindungsrohrleitung (148) zum Verbinden eines dritten Leitungsrohrs (149) zum Leiten von Kühlwasser von dem Kühler (96) nach außen und diagonal abwärts von einem unteren Teil des Thermostatgehäuses (134) vorsteht.

4. Motorrad mit einem Motorkühlsystem gemäß Anspruch 3, wobei das Thermostatgehäuse (134) an einem Pumpengehäuse (128) einer Wasserpumpe (126) befestigt ist, das an der Außenseite der Motorhaupteinheit (33) angebracht ist, wobei eine Drehachse einer Pumpenwelle (131) in einer seitlichen Richtung des Karosserierahmens (F) ist, so dass das Thermostatgehäuse in einer Längsrichtung von der Achse der Pumpenwelle (131) getrennt ist und von dem Pumpengehäuse (128) in der Längsrichtung überlappt wird.

## Revendications

1. Motocycle possédant un système de refroidissement du moteur, comprenant :
une unité principale de moteur (33) pourvue d'une chemise d'eau (125) supportée de façon oscillante verticalement par un cadre (F) par l'intermédiaire d'un arbre de support (43), et
un radiateur (96) dans lequel :
un réservoir supérieur (100) et un réservoir inférieur (101) sont accouplés par l'intermédiaire d'un noyau de refroidissement (102), et
au moins une partie dudit radiateur est agencée en dessous de l'arbre de support (43) en vue latérale ;
ledit radiateur (96) étant supporté par un côté du carter moteur (21), ledit carter moteur formant une partie de l'unité principale de moteur (33),
dans lequel le radiateur (96) est agencé sur le côté du carter moteur (21) avec une extrémité avant dudit réservoir supérieur (100) dudit radiateur agencée en face de l'arbre de support (43),
dans lequel ladite extrémité avant dudit réservoir supérieur (100) et ladite partie avant de l'arbre de support (43) sont définies par rapport à une partie avant dudit motocycle ;
dans lequel ledit arbre de support (43) est agencé le long d'une direction latérale par rapport au cadre ;
dans lequel un plan dudit radiateur est incliné vers l'avant selon un angle (β) par rapport à un plan horizontal, de sorte que l'arrière dudit réservoir supérieur (100) dudit radiateur soit plus élevé ;
dans lequel un tuyau de sortie (140) qui est prévu sur l'unité principale de moteur (33) pour faire sortir l'eau de refroidissement d'une partie la plus haute de la chemise d'eau (125) de l'unité principale de moteur (33), et
un tuyau d'entrée (139), qui est prévu sur le réservoir supérieur (100) du radiateur (96) sur le côté supérieur de l'arbre de support (43), et ledit tuyau de sortie (140) sont accouplés par l'intermédiaire d'un conduit (141) passant par le côté supérieur de l'arbre de support (43) en vue latérale pour être plus élevé depuis le tuyau de sortie (140) au côté du tuyau d'entrée (139),
ledit tuyau d'entrée (139) possédant un axe s'étendant dans une direction longitudinale du cadre (F), et
dans lequel ladite extrémité avant dudit réservoir supérieur (100) est agencée sur le côté avant de la roue arrière (WR) d'un motocycle.

2. Motocycle possédant un système de refroidissement du moteur selon la revendication 1, dans lequel une ouverture (143) dans laquelle l'arbre de support (43) peut être inséré est prévue sur le radiateur (96) avec une extrémité de l'arbre de support (43) opposée à l'ouverture en vue latérale dans un état dans lequel l'unité principale de moteur (33) est supportée par le cadre (F) par l'intermédiaire de l'arbre de support (43).

3. Motocycle possédant un système de refroidissement du moteur selon une quelconque des revendications 1 à 2, dans lequel :
un thermostat (127) pourvu d'un boîtier de thermostat (134) dont un axe est incliné de sorte que le côté supérieur soit positionné à l'extérieur est agencé devant le radiateur (96) ;
un tuyau de raccordement côté chemise d'eau (145) pour raccorder un deuxième conduit (146) pour conduire l'eau de refroidissement à partir de la chemise d'eau (125) fait saillie vers l'intérieur et diagonalement vers le haut à partir d'une partie supérieure du boîtier de thermostat (134) ; et
un tuyau de raccordement côté radiateur (148) pour raccorder un troisième conduit (149) pour conduire l'eau de refroidissement à partir du radiateur (96) fait saillie vers l'extérieur et diagonalement vers le bas à partir d'une partie inférieure du boîtier de thermostat (134).

4. Motocycle possédant un système de refroidissement du moteur selon la revendication 3, dans lequel le boîtier de thermostat (134) est fixé à un corps de pompe (128) d'une pompe à eau (126) attachée au côté extérieur de l'unité principale de moteur (33) avec un axe de rotation d'un arbre de pompe (131) dans une direction latérale du cadre (F) de sorte que le boîtier de thermostat est séparé, dans une direction longitudinale, de l'axe de l'arbre de pompe (131) et est en chevauchement avec le corps de pompe (128) dans la direction longitudinale.
